# EUROPEAN PATENT APPLICATION

(11) **EP 3 007 415 A1**
(43) Date of publication of application: **13.04.2016**
(21) Application number: 13886520.9
(22) Date of filing: 12.09.2013
(51) Int. Cl.: H04M 1/60

(54) **TERMINAL PROMPT MODE ADJUSTING METHOD AND TERMINAL**

(30) Priority: 07.06.2013 CN 201310226077
(71) Applicant: ZTE Corporation, Shenzhen, Guangdong 518057 (CN)
(72) Inventor: DONG, Deliang, Shenzhen Guangdong 518057 (CN); ZHOU, Qiangguo, Shenzhen Guangdong 518057 (CN); SUN, Gengmao, Shenzhen Guangdong 518057 (CN)
(74) Representative: Brevalex
(86) International application number: PCT/CN2013/083422
(87) International publication number: WO 2014/194584

(57) **Abstract**

Disclosed are a terminal prompt mode adjusting method and a terminal. The method includes that signal intensity of a Bluetooth device is detected through a terminal, a prompt mode is matched to a preset prompt mode of the terminal according to the detected signal intensity, and a current prompt mode of the terminal is adjusted to be a successfully-matched prompt mode. Thus, the prompt mode of the terminal can meet the current actual needs of a user, and accordingly the user experience is enhanced. Also, a corresponding relationship is established between signal intensity levels and various prompt modes, and the prompt mode is specifically set as a vibration mode or/and sound prompt modes with different volumes, thus creating more options for dynamic adjustment of the terminal, bringing in a simpler matching process, improving the matching rate of the terminal, and further enhancing the operation experience of users.

## Description

### TECHNICAL FIELD

The present disclosure relates to a terminal prompt mode adjusting method and a terminal, and in particular to a terminal prompt mode adjusting method and a terminal which can dynamically adjust the prompt mode of the terminal.

### BACKGROUND

The Bluetooth technology is broadly applied as a short-distance wireless communication technology. A Bluetooth headset, a car Bluetooth kit and other Bluetooth devices provide great convenience for people as one of applications of the Bluetooth technology; especially, it is very convenient and safe for car owners to use the Bluetooth headset or the car Bluetooth kit to make or answer a call when driving a car. In addition, A Bluetooth headset can avoid the disturbance to others or messy cable of a wired headset for a user who is listening to music at home or office

At present, many mobile phones are set with different profiles, such as a common mode, an outdoor mode, a meeting mode and a headset mode. Different modes have prompt tones with different volumes. A user can select a corresponding profile according to the environment, for example, an outdoor mode is selected in a noisy outdoor environment, in which the ringtone volume is high for avoiding missing calls and short messages.

At present, after a user connects a Bluetooth headset to a mobile phone, the mobile phone enters a headset mode; under this mode, a ringtone is played by a speaker of the terminal, and the ringtone volume is unchanged. Since the headset mode is set for a wired headset, and the wired headset is limited to the length of cable, the distance between the user and the mobile phone is relatively fixed. However, the Bluetooth device is very different from the wired headset, its wireless feature enables the distance between the user and the mobile phone to be changed any time; in addition, there can also be a barrier, e.g. wall, between the mobile phone and the headset, namely between ears of the user. So, if the ringtone volume after the Bluetooth device is connected is set to be unchanged, then it is not good for the user experience; for example, if the user is far away from the mobile phone, the ringtone of an incoming call with the original volume may cause the user to miss the call.

To sum up, after the terminal connected with the Bluetooth device enters the headset mode, if the ringtone volume is unchanged, there are some disadvantages, and the user experience is affected. Thus, how to dynamically adjust a prompt mode of a terminal according to the actual situation is a problem to be solved.

### SUMMARY

The present disclosure provides a method for adjusting a prompt mode of a terminal and the terminal, which solve the problem that a prompt mode of a terminal cannot be dynamically adjusted according to a location relation between a Bluetooth device and the terminal of a user.

To solve the above technical problem, the present disclosure adopts the following technical solutions.

A method for adjusting a prompt mode of a terminal is provide, which includes the following steps:
signal intensity of a Bluetooth device is detected;
a prompt mode is matched to a preset prompt mode of the terminal according to the signal intensity; and
a current prompt mode of the terminal is adjusted to be a successfully-matched prompt mode.

Preferably, the matching a prompt mode to a preset prompt mode of the terminal according to the signal intensity may include that:
a current signal intensity level is determined according to the signal intensity detected currently; and
a prompt mode is matched to the current signal intensity level according to a preset corresponding relationship between a signal intensity level and a prompt mode.

Preferably, the prompt mode may include a vibration mode and at least one sound prompt mode, or may include at least two sound prompt modes, wherein each sound prompt mode has different volumes from each other.

Preferably, the preset corresponding relationship between a signal intensity level and a prompt mode may be that:
a highest signal intensity level corresponds to a vibration mode, and signal intensity levels from high to low except the highest signal intensity level are respectively in one-to-one correspondence with sound prompt modes with prompt tone volumes from low to high;
or, the signal intensity levels from high to low are respectively in one-to-one correspondence with sound prompt modes with prompt tone volumes from low to high.

Preferably, the method for adjusting a prompt mode of a terminal of the present disclosure may further include the following steps:
a communication signal of the terminal is received; and

it is detected whether the terminal opens a Bluetooth mode; if the terminal opens the Bluetooth mode, the signal intensity of the Bluetooth device is detected.

Preferably, before the current prompt mode of the terminal is adjusted to be the successfully-matched prompt mode, the method may further include that:
it is judged whether a prompt tone volume of the successfully-matched prompt mode is the same as that of the current prompt mode of the terminal; if the same, the current prompt mode is kept; or else, the current prompt mode of the terminal is adjusted to be the successfully-matched prompt mode.

The present disclosure also provides a terminal, which includes a signal detecting module, a matching module and an adjusting module;
the signal detecting module is configured to detect signal intensity of the Bluetooth device;
the matching module is configured to match a prompt mode with the preset prompt mode of the terminal according to the signal intensity;
the adjusting module is configured to adjust a current prompt mode of the terminal to be a successfully-matched prompt mode.

Preferably, the matching module may include a level determining unit and a matching subunit;
the level determining unit is configured to determine a current signal intensity level according to the signal intensity detected currently; and
the matching subunit is configured to match a prompt mode to the current signal intensity level according to a preset corresponding relationship between a signal intensity level and a prompt mode.

Preferably, the prompt mode may include a vibration mode and at least one sound prompt mode, or may include at least two sound prompt modes, wherein each sound prompt mode has different volumes from each other.

Preferably, the preset corresponding relationship between a signal intensity level and a prompt mode may be that:
a highest signal intensity level corresponds to a vibration mode, and signal intensity levels from high to low except the highest signal intensity level are respectively in one-to-one correspondence with sound prompt modes with prompt tone volumes from low to high;
or, signal intensity levels from high to low are respectively in one-to-one correspondence with sound prompt modes with prompt tone volumes from low to high.

Preferably, the terminal of the present disclosure may further include a receiving module and a mode detecting module;
the receiving module is configured to receive a communication signal of the terminal;
the mode detecting module is configured to, after the receiving module receives the communication signal, detect whether the terminal opens the Bluetooth mode;
the signal detecting module is configured to, when the mode detecting module detects that the terminal opens the Bluetooth mode, detect the signal intensity of the Bluetooth device.

Preferably, the terminal of the present disclosure may further include a judging module;
the judging module is configured to judge whether a prompt tone volume of the successfully-matched prompt mode is the same as that of the current prompt mode of the terminal;
the adjusting module is configured to, when the judging module judges that the successfully-matched prompt mode is different from the current prompt mode of the terminal, adjust the current prompt mode of the terminal to be the successfully-matched prompt mode.

The beneficial effects of the present disclosure are that: the signal intensity of a Bluetooth device is detected through a terminal, and a prompt mode is matched to a preset prompt mode of the terminal according to the detected signal intensity to obtain a proper prompt mode, thus enabling the prompt mode of the terminal to meet the current actual needs of a user, and accordingly enhancing the user experience.

Also, in this application, a corresponding relationship is established between signal intensity levels and various prompt modes, and a prompt mode is specifically set as a vibration mode or/and sound prompt modes with different volumes, thus creating more options for dynamic adjustment of a terminal, bringing in a simpler matching process, improving the matching rate of the terminal, and further enhancing the operation experience of a user.

### BRIEF DESCRIPTION OF THE DRAWINGS

Fig. 1 is a structural diagram of a terminal in an embodiment of the present disclosure;
Fig. 2 is a structural diagram of the terminal in another embodiment of the present disclosure;
Fig. 3 is a flowchart of a method for adjusting a prompt mode of a terminal in an embodiment of the present disclosure;
Fig. 4 is a flowchart of the method for adjusting a prompt mode of a terminal in another embodiment of the present disclosure; and
Fig. 5 is a flowchart of the method for adjusting a prompt mode of a terminal in still another embodiment of the present disclosure.

### DETAILED DESCRIPTION

The overall idea of the present disclosure is: based on detection of signal intensity of a Bluetooth device, a distance between the Bluetooth device of a user and a terminal is determined or whether there is a barrier between them is determined; a corresponding prompt mode is matched according to the signal intensity to obtain a prompt mode meeting the current signal intensity, and the current prompt mode is adjusted to the prompt mode meeting the current signal intensity. The Bluetooth device in the present disclosure is a Bluetooth device which can be connected to the terminal, preferably a Bluetooth headset or a car Bluetooth kit, and so on. The prompt mode in the present disclosure may include a vibration mode and a sound prompt mode; the vibration mode is that the terminal prompts the user by vibration; the sound prompt mode is that the terminal prompts the user through prompt tones; the prompt tones here can specifically include terminal ringtones set by the user, intelligent playing of phone numbers, automatic playing of the caller names, and so on. By taking that a mobile phone uses a Bluetooth headset for example, if the user takes the mobile phone, the detected signal intensity is relatively strong because the Bluetooth headset is close to the terminal, then the vibration mode or the sound prompt mode can be adjusted and switched to the one with low volume, so as not to bring a bad experience to the user because of too loud ringtone.

For making the technical solutions and the advantages of the present disclosure more clear, the present disclosure is elaborated below in combination with the embodiments and the accompanying drawings.

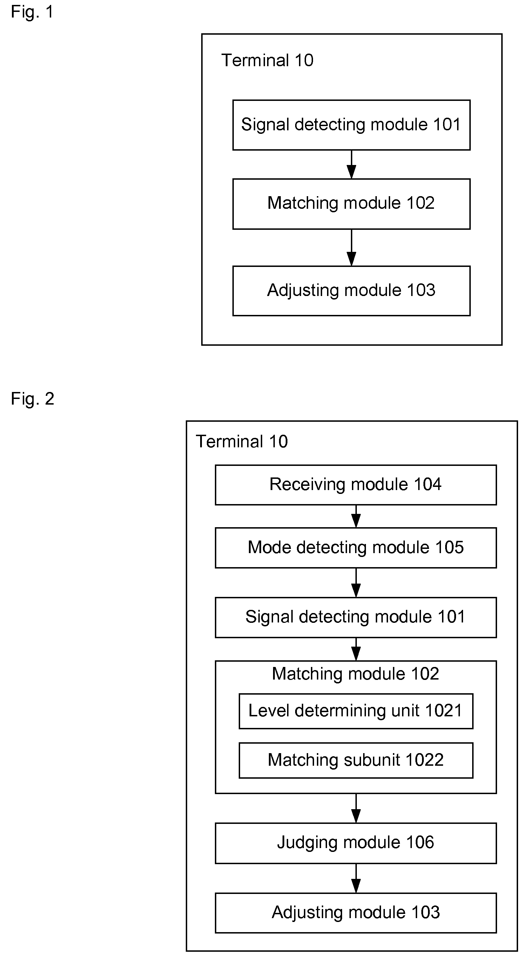

With reference to Fig. 1, a terminal 10 is provided in the present disclosure, which includes a signal detecting module 101, a matching module 102 and an adjusting module 103; wherein,
the signal detecting module 101 is configured to detect signal intensity of a Bluetooth device
the matching module 102 is configured to match a prompt mode to a preset prompt mode of the terminal according to the signal intensity;
the adjusting module 103 is configured to adjust a current prompt mode of the terminal to be a successfully-matched prompt mode.

With reference to Fig. 2, in an embodiment of the present disclosure, the terminal 10 may also include a receiving module 104 and a mode detecting module 105; the receiving module 104 is mainly configured to receive a communication signal of the terminal;
the communication signal here is the one received by the terminal to prompt the user, such as a signal related to an incoming call, short message, e-mail or related functions of various software needed to prompt;
the mode detecting module 105 is configured to, after the receiving module 104 receives the communication signal, detect whether the terminal opens a Bluetooth mode;
the Bluetooth mode here is a unique mode set by the present disclosure, and it is added on the basis of the original profile, that is, after the Bluetooth device of the user is connected to the terminal, the terminal can automatically switch to the Bluetooth mode or is manually switched to the Bluetooth mode by the user; after the terminal determines that the current mode is switched to the Bluetooth mode, the signal detecting module 101 detects the signal intensity of the Bluetooth device only if the terminal opens the Bluetooth mode.

In addition, for avoiding repeated switching of the same prompt mode, the terminal 10 in the present disclosure further includes a judging module 106; the judging module 106 is configured to judge whether the prompt tone volume of the successfully-matched prompt mode is the same as that of the prompt mode used by the terminal currently; if they are the same, the adjusting module 103 is not informed to adjust the current prompt mode; if they are different, then the adjusting module 103 adjusts the current prompt mode of the terminal to be the successfully-matched prompt mode.

In the present disclosure, the signal detecting module 101, the matching module 102, the adjusting module 103, the receiving module 104, the mode detecting module 105 and the judging module 106 can be implemented by a Central Processing Unit (CPU), a Digital Signal Processor (DSP) or a Field-Programmable Gate Array (FPGA) in the terminal 10.

Furthermore, in the present disclosure, the matching 102 can also include a level determining unit 1021 and a matching subunit 1022; wherein,
the level determining unit 1021 is configured to determine the current signal intensity level according to the current signal intensity detected;
the matching subunit 1022 is configured to match a prompt mode to the current signal intensity level according to a preset corresponding relationship between a signal intensity level and a prompt mode. The signal intensity levels mentioned in the embodiment can be set by the user, but a preferable setting mode is that the terminal performs sectional setting by itself according to the type of the Bluetooth device, divides a signal range of the Bluetooth device into several consecutive sub-segments, and respectively makes these sub-segments correspond to different signal intensity levels. Preferably, the sub-segment with the strongest signal intensity can be classified as the one at the highest signal intensity level, and these sub-segments corresponding to the different signal intensities in descending order are separately classified as ones at the signal intensity levels from high to low.

The prompt mode mentioned above may include a vibration mode and a sound prompt mode; preferably, the prompt mode in the present disclosure may include a vibration mode and at least one sound prompt mode, or include at least two sound prompt modes, wherein each sound prompt mode has different volumes from each other. The prompt mode is set like this because different users have different requirements, some users prefer the vibration prompt mode when the terminals are carried with them or it is not convenient for them to be disturbed by a ringtone; if users do not like the vibration prompt mode but prefer the sound prompt mode, more options are given to the users.

Generally, the vibration prompt mode requires users to carry the terminals with them or place the terminals at a position close to them, so when a corresponding relationship between a signal intensity level and a prompt mode is set, the highest signal intensity level is usually made corresponding to the vibration mode. In addition, the signal intensity is related to two key factors which are distance and barrier; the longer the distance is, the weaker the signal intensity is; and the bigger and thicker the barrier is, the weaker the signal intensity is. Conversely, the signal intensity level reflects the situation of the distance and barrier between a current terminal and a Bluetooth device, and the two factors have the similar influence on the diffusion of the prompt tone volume. The lower the signal is, the farther the distance between the terminal and the Bluetooth is or the more the barriers between them are, for example, a user is in another room, there are walls, and so on; therefore, except the highest signal intensity level corresponding to the vibration mode, the other signal intensity levels from high to low are respectively in one-to-one correspondence with the sound prompt modes with prompt tone volumes from low to high. If users do not like the vibration prompt mode, then the signal intensity levels from high to low are directly made to respectively correspond to the sound prompt modes with prompt tone volumes from low to high one to one. In the embodiment, the corresponding relationship between a signal intensity level and a prompt mode can be preset by a user; or when a user sets a Bluetooth device to be connected, the terminal automatically displays a corresponding setting interface to prompt the user to set the corresponding relationship.

The functions of these modules of the terminal 10 in the present disclosure and the method for adjusting a prompt mode of a terminal provided by the present disclosure are elaborated below in combination with the accompanying drawings.

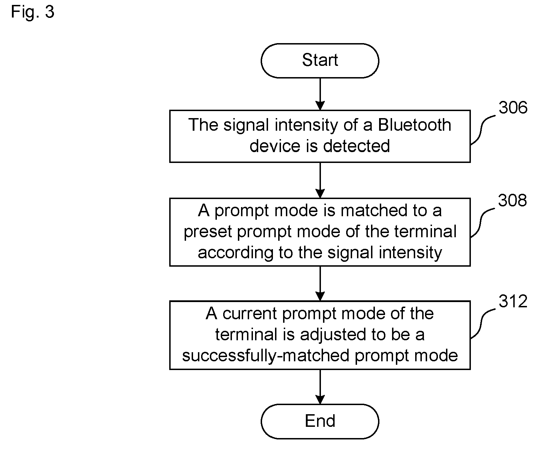

With reference to Fig. 3, the method for adjusting a prompt mode of a terminal in the present disclosure mainly includes the following steps.

Step 306 is that signal intensity of a Bluetooth device is detected; then Step 308 is executed;
in this step, the signal detecting module 101 performs signal detection on the Bluetooth device which is successfully matched by the terminal, and obtains signal intensity data.

Step 308 is that a prompt mode is matched to a preset prompt mode of the terminal according to the signal intensity; then Step 312 is executed;
in this step, the matching module 102 matches a corresponding prompt mode according to the signal intensity detected, and informs the adjusting module 103 to call the corresponding prompt mode for replacement.

Step 312 is that the current prompt mode of the terminal is adjusted to be the successfully-matched prompt mode;
in this step, the adjusting module 103 adjusts the current prompt mode of the terminal to be the successfully-matched prompt mode.

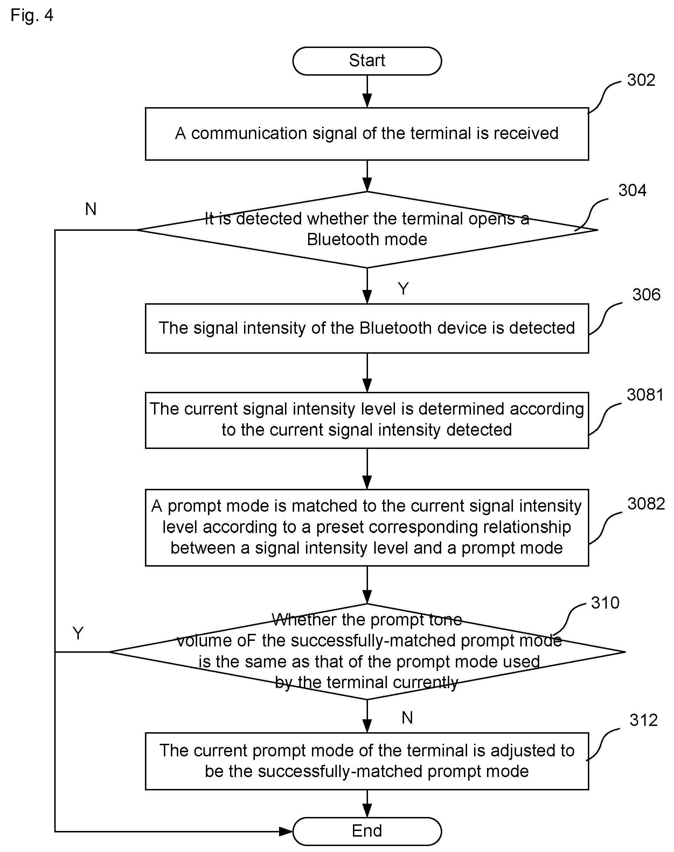

With reference to Fig. 4, in the present embodiment, the method for adjusting a prompt mode of a terminal can also include the following steps.

Before Step 306, Step 302 and Step 304 can also be included.

Step 302 is that a communication signal of the terminal is received; then Step 304 is executed;
in this step, the receiving module 104 receives the communication signal of the terminal; here, the communication signal here is the one received by the terminal to prompt the user, such as a signal related to an incoming call, short message, e-mail or related functions of various software needed to prompt.

Step 304 is that it is detected whether the terminal opens a Bluetooth mode; if the terminal opens the Bluetooth mode, then Step 306 is executed; or else, it is ended;
in this step, the mode detecting module 105 detects the current profile of the terminal; if the current profile is the Bluetooth mode, then it is considered that the terminal is connected to the Bluetooth device, and it is needed to dynamically adjust the prompt mode, then Step 306 is executed; the opening of the Bluetooth device can be set by default to be that the Bluetooth mode is automatically selected when the terminal is connected to the Bluetooth device, or that after the terminal is connected to the Bluetooth device, the user is prompted to choose whether to switch to the Bluetooth mode. When the terminal is in other modes, it is determined that the user does not need to perform dynamic adjustment, and the subsequent steps are not executed.

In the present embodiment, Step 302 and Step 304 are added for enhancing the user experience better and selecting the time of detecting the Bluetooth signal intensity by the terminal. It should be clarified that Step 302 and Step 304 are not necessary in the present disclosure, the terminal detects the signal intensity of the Bluetooth device regularly or irregularly; when the terminal does not detect the signal intensity, it is determined that there is no Bluetooth device connected, and corresponding operation is not performed.

In the present embodiment, Step 308 can also include Step 3081 and Step 3082, wherein,

Step 3081 is that the current signal intensity level is determined according to the current signal intensity detected; Step 3082 is executed;
in this step, the level determining unit 1021 in the matching module 102 determines the signal intensity level corresponding to the signal intensity detected; the way of setting the signal intensity and the signal intensity level is the same as the one in the above embodiment, so it will not be repeated here.

Step 3082 is that a prompt mode is matched to the current signal intensity level according to a preset corresponding relationship between a signal intensity level and a prompt mode; Step 310 is executed;
in this step, after the current signal intensity level is determined, the corresponding prompt mode is matched according to the preset corresponding relationship between a signal intensity level and a prompt mode. In the present disclosure, the preset corresponding relationship between a signal intensity level and a prompt mode can refer to the setting way in Table 1; in Table 1, the signal intensity is divided into 4 levels in advance, namely Level 1, Level 2, Level 3 and Level 4; and each level corresponds to a certain signal intensity interval; the signal intensity relation of the four levels is QLevel 1 < QLevel 2 < QLevel 3 < QLevel 4. In the present disclosure, there are four sound prompt modes in one-to-one correspondence with the four signal intensity levels, wherein the volume order of the four sound prompt modes is Vgrade 1 < Vgrade 2 < Vgrade 3 < Vgrade 4.

**Table 1**

| Signal intensity levels N | Prompt modes |
|---|---|
| Level 1 | Vgrade 1 |
| Level 2 | Vgrade 2 |
| Level 3 | Vgrade 3 |
| Level 4 | Vgrade 4 |

In the present embodiment, before Step 312, Step 310 can also be included for avoiding the repeated switching of the same prompt mode.

Step 310 is that it is judged whether the prompt tone volume of the successfully-matched prompt mode is the same as that of the prompt mode used by the terminal currently; if they are the same, it is ended; or else, Step 312 is executed;
in this step, the judging module 106 judges whether the prompt tone volume of the successfully-matched prompt mode is the same as that of the prompt mode used by the terminal currently; specifically, if the successfully-matched mode is the vibration mode, then it is judged whether the mode used by the terminal currently is the vibration mode; if the successfully-matched mode is the sound prompt mode, then it is judged whether the volume of the successfully-matched sound prompt mode is the same as that of the mode used by the terminal currently.

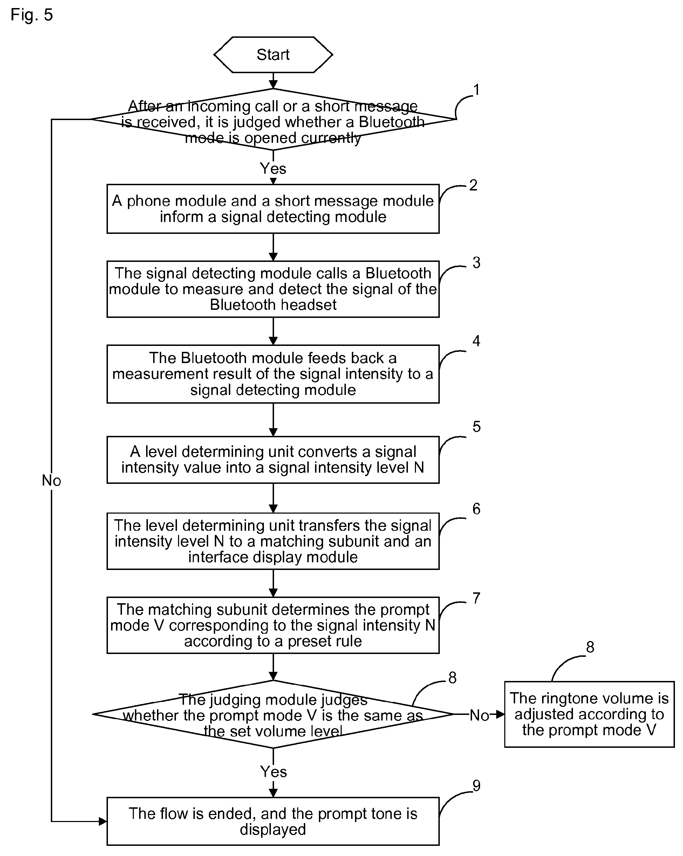

With reference to Fig. 5, by taking that a mobile phone uses a Bluetooth headset for example, the method for adjusting a prompt mode of a terminal in the present disclosure is elaborated below:
Step 1: a phone module or a short message module of the mobile terminal receives an incoming call or a short message, then judges whether a Bluetooth mode is opened currently; if not opened, then Step 9 is executed; if opened, then Step 2 is executed;
Step 2: the phone module and the short message module inform a signal detecting module;
Step 3: the signal detecting module calls a Bluetooth module to measure and detect a signal of the Bluetooth headset;
Step 4: the Bluetooth module feeds back a measurement result of the signal intensity to the signal detecting module;
Step 5: a level determining unit converts a signal intensity value into a signal intensity level N;
Step 6: the level determining unit transfers the signal intensity level N to a matching subunit and an interface display module;
Step 7: the matching subunit determines the prompt mode V corresponding to the signal intensity N according to a preset rule, for example the rule shown in Table 1;
Step 8: a judging module judges whether the prompt mode V in Step 7 is matched with the current volume level; if matched, then Step 9 is executed; or else, the ringtone volume is adjusted according to the prompt mode V; and
Step 9: the flow of the solution is ended, and the prompt tone is played.

The above content is a further elaboration of the present disclosure made in combination with the specific embodiments, and it should not be considered that the specific implementations of the present disclosure are only limited to the elaboration. Without departing from the conception of the present disclosure, those skilled in the art can also make a number of simple deductions and replacements, which shall fall within the scope of the claims of the present disclosure.

## Claims

1. A method for adjusting a prompt mode of a terminal, comprising:
detecting signal intensity of a Bluetooth device;
matching a prompt mode to a preset prompt mode of the terminal according to the signal intensity; and
adjusting a current prompt mode of the terminal to be a successfully-matched prompt mode.

2. The method for adjusting a prompt mode of a terminal according to claim 1, wherein the matching a prompt mode to a preset prompt mode of the terminal according to the signal intensity comprises:
determining a current signal intensity level according to the signal intensity detected currently; and
matching a prompt mode to the current signal intensity level according to a preset corresponding relationship between a signal intensity level and a prompt mode.

3. The method for adjusting a prompt mode of a terminal according to claim 2, wherein the prompt mode comprises a vibration mode and at least one sound prompt mode, or comprises at least two sound prompt modes, wherein each sound prompt mode has different volumes from each other.

4. The method for adjusting a prompt mode of a terminal according to claim 3, wherein the preset corresponding relationship between a signal intensity level and a prompt mode is that:
a highest signal intensity level corresponds to a vibration mode, and signal intensity levels from high to low except the highest signal intensity level are respectively in one-to-one correspondence with sound prompt modes with prompt tone volumes from low to high;
or, signal intensity levels from high to low are respectively in one-to-one correspondence with sound prompt modes with prompt tone volumes from low to high.

5. The method for adjusting a prompt mode of a terminal according to any one of claims 1 to 4, further comprising:
receiving a communication signal of the terminal; and
detecting whether the terminal opens a Bluetooth mode; if the terminal opens the Bluetooth mode, detecting the signal intensity of the Bluetooth device.

6. The method for adjusting a prompt mode of a terminal according to any one of claims 1 to 4, before adjusting the current prompt mode of the terminal to be the successfully-matched prompt mode, the method further comprising:
judging whether a prompt tone volume of the successfully-matched prompt mode is the same as that of the current prompt mode of the terminal; if the same, keeping the current prompt mode; or else, adjusting the current prompt mode of the terminal to be the successfully-matched prompt mode.

7. A terminal, comprising a signal detecting module, a matching module and an adjusting module;
the signal detecting module is configured to detect signal intensity of a Bluetooth device
the matching module is configured to match a prompt mode to a preset prompt mode of the terminal according to the signal intensity;
the adjusting module is configured to adjust a current prompt mode of the terminal to be a successfully-matched prompt mode.

8. The terminal according to claim 7, wherein the matching module comprises a level determining unit and a matching subunit;
the level determining unit is configured to determine a current signal intensity level according to the signal intensity detected currently; and
the matching subunit is configured to match a prompt mode to the current signal intensity level according to a preset corresponding relationship between a signal intensity level and a prompt mode.

9. The terminal according to claim 8, wherein the prompt mode comprises a vibration mode and at least one sound prompt mode, or comprises at least two sound prompt modes, wherein each sound prompt mode has different volumes from each other.

10. The terminal according to claim 9, wherein the preset corresponding relationship between a signal intensity level and a prompt mode is that:
a highest signal intensity level corresponds to a vibration mode, and signal intensity levels from high to low except the highest signal intensity level are respectively in one-to-one correspondence with sound prompt modes with prompt tone volumes from low to high;
or, signal intensity levels from high to low are respectively in one-to-one correspondence with sound prompt modes with prompt tone volumes from low to high.

11. The terminal according to any one of claims 7 to 10, further comprising a receiving module and a mode detecting module;
the receiving module is configured to receive a communication signal of the terminal;
the mode detecting module is configured to, after the receiving module receives the communication signal, detect whether the terminal opens a Bluetooth mode;
the signal detecting module is configured to, when the mode detecting module detects that the terminal opens the Bluetooth mode, detect the signal intensity of the Bluetooth device.

12. The terminal according to any one of claims 7 to 10, further comprising a judging module;
the judging module is configured to judge whether a prompt tone volume of the successfully-matched prompt mode is the same as that of the current prompt mode of the terminal;
the adjusting module is configured to, when the judging module judges that the successfully-matched prompt mode is different from the current prompt mode of the terminal, adjust the current prompt mode of the terminal to be the successfully-matched prompt mode.
